# EUROPÄISCHE PATENTSCHRIFT

(11) **EP 0 940 080 B1**
(45) Veröffentlichungstag und Bekanntmachung des Hinweises auf die Patenterteilung: **15.01.2003**
(21) Anmeldenummer: 99103769.8
(22) Anmeldetag: 26.02.1999
(51) Int. Cl.: A01N 47/42

(54) **Desinfektionsmittel und Antiseptikum auf der Basis von Alkoholen**
Disinfecting agent and antiseptic based on alcohols
Agent désinfectant et antiseptique à base d'alcools

(30) Priorität: 04.03.1998 DE 19808963
(43) Veröffentlichungstag der Anmeldung: 08.09.1999
(73) Patentinhaber: Bode Chemie GmbH & Co., 22525 Hamburg (DE)
(72) Erfinder: Jülich, Wolf-Dieter Dr., 17489 Greifswald (DE); Seibt, Horst Dr., 10407 Berlin (DE); Pietsch, Hanns Dr., 20148 Hamburg (DE); Kramer, Exel Prof., 17487 Greifswald (DE); Ohme, Roland Dr., 12527 Berlin (DE); Ballschuh, Detlef Dr., 12524 Berlin (DE); Knieler, Roland Dr., 22529 Hamburg (DE)
(74) Vertreter: Dinné, Erlend

(56) Entgegenhaltungen:
- N. WEIGAND ET AL.: "Vergleigende Untersuchung der antimikrobiellen Wirksamkeit von S-Alkylthiuroniumhalogeniden." ZENTRALBLATT FÜR BAKTERIOLOGIE, PARASITENKUNDE, INFEKTIONSKRANKHEITEN UND HYGIENE, ERSTE ABTEILUNG ORIGINALE-REIHE A, Bd. 237, Nr. 1, 1977, Seiten 118-123, XP002106274

## Beschreibung

Die vorliegende Erfindung betrifft alkoholische Desinfektionsmittel und Antiseptika, die mindestens ein Alkylthiouronium- und/oder α, ω-Alkylendithiouroniumsalz enthalten, insbesondere alkoholische Desinfektionsmittel und Antiseptika zur Behandlung der Hände und der Haut.

Die aliphatischen Alkohole Ethanol, Propanol-1 und Propanol-2 sind als Wirkstoffe zur Desinfektion von Haut und Händen bzw. für die Haut- und Händeantiseptik seit langem bekannt. Mit Desinfektionsmitteln und Antiseptika auf der Basis von Alkoholen können bei kurzen Einwirkzeiten von 30 bis 60 Sekunden Keimzahlreduktionen von bis zu 99,9 % erzielt werden. Eine allgemeine, kurzgefaßte Darstellung der mikrobiziden Wirksamkeit von Alkoholen findet sich in dem Buch: *K.H. Wallhäußer, Praxis der Sterilisation, Desinfektion und Konservierung". G. Thieme Verlag, Stuttgart, New York, 5. Auflage, S. 469 - 474.*

Alkohole besitzen eine bakterizide Wirkung, die von Methanol zu Propanol zunimmt. Verwendet werden vor allem Ethanol, n-Propanol und Isopropanol, wobei der Alkoholgehalt der Zubereitungen im allgemeinen zwischen 50 und 80 % liegt. Der wesentliche Vorteil von Alkoholen ist, daß der Wirkungseintritt sehr rasch erfolgt. Nachteilig ist, daß sie nicht gegen Sporen wirksam sind und daß die Wirkung nach sehr kurzer Zeit endet, da Alkohole schnell verdunsten.

Es hat sich gezeigt, daß alkoholische Desinfektionsmittel und Antiseptika Spuren von Bacillus- und Clostridienarten nicht abzutöten vermögen. Zwar kann man die Sporenfreiheit von alkoholischen Lösungen durch Filtration erreichen, allerdings kann in der Praxis nicht vollständig ausgeschlossen werden, daß Keimsporen (nachträglich) in die Präparate gelangen, beispielsweise beim kurzzeitigen Öffnen der Aufbewahrungsgefäße oder beim Abfüllen der Mittel in Behälter, die bereits Sporen enthalten. Aus diesem Grund besteht bei der Verwendung von alkoholischen Haut- und Handantiseptika stets ein gewisses Risiko einer durch Sporen verursachten Infektion.

Im Bereich der Haut- und Händedesinfektion ist insbesondere auch eine Wirksamkeit gegen Dermatophyten erwünscht. Zu den Dermatophyten gehören die wichtigsten Erreger von Haut-, Nagel- und Haarmykosen. Die Ansiedlung von Dermatophyten wird durch übermäßiges Schwitzen, alkalischen pH-Wert oder ungeeignete (Fuß-) Bekleidung gefördert. Insbesondere beim langen Tragen von undurchlässigen Handschuhen, wie es beispielsweise bei OP-Personal in Krankenhäusem üblich ist, schwitzt die Haut, wobei die Schweißflüssigkeit auf der Haut verbleibt. Daher ist gerade im Bereich der chirurgischen Händedesinfektion eine Wirkung gegen Dermatophyten von besonderer Bedeutung.

Aufgabe der Erfindung ist es, die Nachteile des Standes der Technik zu vermeiden und alkoholhaltige Desinfektionsmittel und Antiseptika zu finden, die eine hohe mikrobizide Wirkung zeigen und dabei gleichzeitig sporozid wirksam sind und welche sich durch eine gute Verträglichkeit auszeichnen und insbesondere zur Behandlung der Hände und der Haut geeignet sind.

Die Aufgaben werden erfindungsgemäß gelöst.

Die hohe antimikrobielle Wirksamkeit von Dodecylthiouroniumchlorid ist an sich bekannt (*Zbl. Bakt. Hyg., 1 Orig. A 237, 117-123, 1977).* Allerdings ist diese Verbindung - ebenso wie andere Thiouroniumsalze - in wäßriger Lösung labil, neigt z.B. in Gegenwart von Metallen zum Ausflocken, und ist daher nur schwer in desinfizierende Formulierungen einzuarbeiten. Auch ist eine sporozide Wirksamkeit von Thiouroniumsalzen bisher nicht bekannt.

Als Thiouroniumsalze werden im folgenden Alkylthiouronium- und/oder α, ω-Alkylendithiouroniumsalze bezeichnet. Alkylthiouroniumsalze zeichnen sich durch folgende chemische Struktur aus 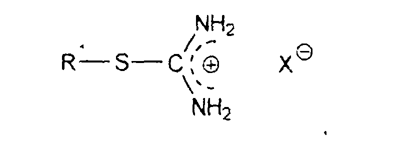 wobei R¹ gewählt wird aus der Gruppe der verzweigten und unverzweigten Alkylgruppen mit 1 bis 20 Kohlenstoffatomen und X⁻ ein beliebiges Anion darstellt, vorzugsweise aber ein Halogenid-lon.

α,ω-Alkylendithiouroniumsalze sind durch die folgende Struktur gekennzeichnet 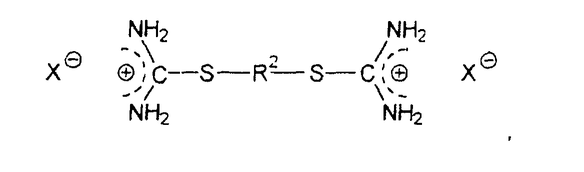 wobei R² gewählt wird aus der Gruppe der verzweigten und unverzweigten Alkylgruppen mit 1 bis 20 Kohlenstoffatomen und X⁻ ein beliebiges Anion darstellt, vorzugsweise aber ein Halogenid-Ion.

Es war indes überraschend und für den Fachmann nicht vorauszusehen, daß ein Desinfektionsmittel oder Antiseptikum mit mindestens einem alkoholischen Wirkstoff, das dadurch gekennzeichnet ist, daß es mindestens ein Alkylthiouronium- und/oder α, ω-Alkylendithiouroniumsalz enthält, den geschilderten Nachteilen des Standes der Technik Abhilfe schaffen würde.

Desinfektionsmittel im Sinne der vorliegenden Erfindung sind besonders geeignet zur Behandlung der Hände und der Haut. Erfindungsgemäße Desinfektionsmittel zeigen eine sehr gute Wirksamkeit gegen Dermatophyten und zeichnen sich überraschenderweise insbesondere dadurch aus, daß sie eine gute Wirksamkeit gegen Sporen haben.

Eine gute Wirksamkeit gegen Sporen war insbesondere deswegen nicht zu erwarten, weil Thiouroniumsalze eine hohe strukturelle Ähnlichkeit mit quaternären Ammoniumverbindungen haben, welche bekanntermaßen keine sporozide Wirksamkeit zeigen.

Das mikrobizide Agens in den erfindungsgemäßen Formulierungen ist vorzugsweise der Alkohol, während das Thiouroniumsalz bevorzugt als Remanenzwirkstoff dient, der gegenüber dem Stand der Technik den Vorteil bietet, daß er sporozid wirkt und damit die Wirkungslücke der Alkohole schließt.

Die bakterizide und fungizide Wirkung der erfindungsgemäßen Formulierungen ist ausgesprochen gut. Von Vorteil für ihre Anwendung im Bereich der Desinfektion von unbelebten Oberflächen, insbesondere harten Oberflächen und Geräten, ist vor allem ihre inaktivierende Wirkung auf das Hepatitis B-Virus. Das Hepatitis B-Oberflächenantigen wird bereits nach einer Einwirkungszeit von 5 Minuten zerstört.

Es ist erfindungsgemäß möglich, die Einsatzmengen an Alkylthiouronium- und/oder α, ω-Alkylendithiouroniumsalzen gegenüber dem Stande der Technik erheblich zu steigern. Vorteilhaft ist es, den Gehalt an einem oder mehreren Alkylthiouronium- und/oder α, ω-Alkylendithiouroniumsalzen in der alkoholischen Desinfektionslösung zwischen 0,05 und 5 Gew.-%, besonders vorteilhaft zwischen 0,1 und 0,5 Gew.-%, bezogen auf das Gesamtgewicht der Zubereitung, zu wählen.

Geeignete alkoholische Wirkstoffe sind beispielsweise monofunktionale Alkohole mit 1 bis 4 Kohlenstoffatomen. Bevorzugt werden Isopropanol, n-Propanol, Ethanol oder Methanol verwendet. Bevorzugt sind auch Gemische der Alkohole, z. B. Gemische mit zwei oder drei Alkoholen, insbesondere solche, die Ethanol enthalten.

Die Alkohole oder Alkoholmischungen sind vorzugsweise in Mengen von 30 bis 95 Gew.-%, insbesondere 50 bis 90 Gew.-%, besonders bevorzugt 60 bis 80 Gew.-% enthalten, jeweils bezogen auf das Gesamtgewicht der Zubereitungen.

Die erfindungsgemäßen Desinfektionsmittel können ferner auch einen oder mehrere Hautpflegestoffe, insbesondere Rückfetter enthalten. Bevorzugt sind Paraffinium subliquidum, Isostearylisostearat, Glycerin, Allantoin, Isopropylmyristat, Isopropylpalmitat oder Milchsäure oder Gemische davon. Die Hautpflegestoffe oder Hautpflegegemische können beispielsweise in Mengen von 0,1 bis 3 Gew.-%, bezogen auf das Gesamtgewicht der Zubereitungen, enthalten sein.

Zusätzlich zu den vorstehend genannten Komponenten können die erfindungsgemäßen Desinfektionsmittel für derartige Zubereitungen übliche Farbstoffe, Duftstoffe und/oder andere übliche Hilfsstoffe enthalten Diese tragen in der Mehrzahl der Fälle nicht zur desinfizierenden Wirkung bei, sondern dienen der Lagerbarkeit sowie ästhetischen Zwecken. Es ist jedoch auch möglich, solche Komponenten zu verwenden, die eine (konservierende, pflegende usw.) Wirkung entfalten und dabei gleichzeitig für eine bestimmte Farbe und/oder einen angenehmen Duft sorgen.

Die jeweils einzusetzenden Mengen an derartigen Trägerstoffen und Parfüm können in Abhängigkeit von der Art des jeweiligen Produktes vom Fachmann durch einfaches Ausprobieren leicht ermittelt werden. Zusätzlich können die Desinfektionsmittel auch Feuchthalter, oder weitere mikrobizide Wirkstoffe enthalten.

Die folgenden Beispiele dienen dazu, die Erfindungen zu beschreiben, selbstverständlich ohne daß beabsichtigt ist, die Erfindungen auf diese Beispiele zu beschränken. Alle Mengenangaben, Anteile und Prozentanteile sind, soweit nicht anders angegeben, auf das Gewicht und die Gesamtmenge bzw. auf das Gesamtgewicht der Zubereitungen bezogen.

### Beispiele

### Beispiel 1: Alkoholische Händedesinfektion

### n-Decylthiouroniumbromid als Remanenzwirkstoff in Kombination mit n- und iso-Propanol:

- 45,0 Gew.-%: iso-Propanol
- 30,0 Gew.-%: n-Propanol
- 1,0 Gew.-%: Tetradecanol
- 0,5 Gew.-%: Glycerin
- 0,2 Gew.-%: n-Decylthiouroniumbromid
- 28,3 Gew.-%: Wasser
wurden miteinander bei Raumtemperatur gemischt und gelöst. Es entstand eine klare, farblose Lösung. Die Wirksamkeit als Händedesinfektionsmittel wurde sowohl im hygienischen als auch im chirurgischen Händeversuch der DGHM (Deutsche Gesellschaft für Hygiene und Mikrobiologie) nachgewiesen. Ergebnis: Chirurgische Händedesinfektion. Die Sporozidie wurde nachgewiesen, indem die obige Mischung mit einem Sporenteststreifen von Bacillus subtilis ATCC 9372 versetzt wurde, der 10⁶ KBE/ml enthielt. Nach 72 Stunden Einwirkzeit wurde der Streifen bebrütet. Es wurde kein Wachstum gefunden.

### Beispiel 2 - 4:

In diesen Beispielen wurde wie in Beispiel 1 verfahren, jedoch wurden anstelle von n-Decylthiouroniumbromid die folgenden Verbindungen eingesetzt:
- **Beispiel 2:**: 0,2 Gew.-% n-Dodecylthiouroniumbromid
- **Beispiel 3:**: 0,2 Gew.-% 2-oxo-3-aza-n-Undecyl-thiouroniumchlorid
- **Beispiel 4:**: 0,2 Gew.-% 2-oxo-3-aza-n-Tridecyl-thiouroniumchlorid

Die alkoholischen Lösungen wurden wie in Beispiel 1 auf ihre Eignung als Händedesinfektionsmittel geprüft. Ergebnis: Chirurgische Händedesinfektion in 3 Minuten, hygienische Händeseinfektion in 30 Sekunden. Die Sporozidie wurde nachgewiesen, indem die obige Mischung mit einem Sporenteststreifen von Bacillus subtilis ATCC 9372 versetzt wurde, der 10⁶ KBE/ml enthielt. Nach 72 Stunden Einwirkzeit wurde der Streifen bebrütet. Es wurde kein Wachstum gefunden.

### Beispiel 5 - 8: Hautdesinfektionsmittel

- 60,0 Gew.-%: iso-Propanol
- 25,0 Gew.-%: n-Propanol
- 0,2 Gew.-%: Thiouroniumsalz*
- 14,8 Gew.-%: Wasser

### *Thiouroniumsalz ist in:

**Beispiel 5:** n-Decylthiouroniumbromid
**Beispiel 6:** n-Dodecylthiouroniumbromid
**Beispiel 7:** 2-oxo-3-aza-n-Undecyl-thiouroniumchlorid
**Beispiel 8:** 2-oxo-3-aza-n-Tridecyl-thiouroniumchlorid

Es wurden klare Lösungen hergestellt und auf ihre Eignung als Händedesinfektionsmittel geprüft. Ergebnis: Chirurgische Händedesinfektion in 3 Minuten, hygienische Händeseinfektion in 30 Sekunden. Ferner wurde die Wirksamkeit an talgdrüsenarmer und talgdrüsenreicher Haut geprüft nach den Richtlinien der DGHM. Ergebnis: talgdrüsenarme Haut: 15 Sekunden, talgdrüsenreiche Haut: 10 Minuten. Es wurde ein Sporozidie-Test entsprechend Beispiel 1 durchgeführt. Ergebnis: Nach 72 Stunden Einwirkzeit kein Wachstum.

### Beispiel 9:

- 85,0 Gew.-%: Ethanol (96-%ig, vergällt mit 1 % Butanon)
- 0,1 Gew.-%: n-Decylthiouroniumbromid
- 14.9 Gew.-%: Wasser
wurden zu einer klaren, farblosen Lösung gemischt und auf ihre Eignung als Hände- und Hautdesinfektionsmittel geprüft wie in den Beispielen 5 - 8 beschrieben.

### Ergebnisse:

| | |
|---|---|
| Chirurgische Händedesinfektion | 3 Minuten |
| Hygienische Händeseinfektion | 30 Sekunden |
| Talgdrüsenarme Haut | 15 Sekunden |
| Talgdrüsenreiche Haut | 10 Minuten |
| Sporozidie nach 72 Stunden Einwirkzeit | kein Wachstum |

## Patentansprüche

1. Desinfektionsmittel oder Antiseptikum mit einem alkoholischen Wirkstoff, **dadurch gekennzeichnet, dass** es mindestens ein Alkylthiouronium- und/oder α,ω-Alkylendithiouoniumsalz enthält und der Gehalt an einem oder mehreren Alkylthiouronium- und/oder α,ω-Alkylendithiouroniumsalzen 0,05 bis 5 Gew.-%, bezogen auf das Gesamtgewicht der Zubereitung beträgt.

2. Desinfektionsmittel oder Antiseptikum nach Anspruch 1, **dadurch gekennzeichnet, dass** es als alkoholischen Wirkstoff Ethanol, Isopropanol oder n-Propanol oder deren Gemische enthält.

3. Desinfektionsmittel oder Antiseptikum nach Anspruch 1, **dadurch gekennzeichnet, dass** der Gehalt an dem Alkohol oder den Alkoholen 30 bis 95 Gew.-%, bezogen auf das Gesamtgewicht der Zubereitung beträgt.

4. Desinfektionsmittel oder Antiseptikum nach Anspruch 1, **dadurch gekennzeichnet, dass** zusätzliche Hilfs-, Zusatz- und/oder Wirkstoffe, insbesondere Feuchthalter, Rückfetter, Farbstoffe, und/oder Parfüm enthalten sind.

5. Desinfektionsmittel oder Antiseptikum nach Anspruch 1, **dadurch gekennzeichnet, dass** zusätzlich weitere mikrobizide Wirkstoffe enthalten sind.

6. Verwendung von Desinfektionsmitteln nach Anspruch 1 als Hautdesinfektionsmittel, Händedesinfektionsmittel und/oder Desinfektionsmittel für insbesondere unbelebte Oberflächen oder insbesondere harte Oberflächen und Geräte.

7. Verwendung von mindestens einem Alkylthiouronium- und/oder α,ω-Alkylendithiouroniumsalz in einem Hautdesinfektionsmittel oder einem Händedesinfektionsmittel.

## Claims

1. Disinfectant or antiseptic with an alcoholic active agent, **characterised by** the disinfectant or antiseptic containing at least one alkylthiouronium and/or α, ω-alkylendithiouronium salt and the concentration of one or more alkylthiouronium and/or α, ω-alkylendithiouronium salts being 0.05 to 5% in weight relative to the total weight of the preparation.

2. Disinfectant or antiseptic according to claim 1 **characterised by** the alcoholic active agent it contains being ethanol, iso-propyl alcohol or n-propyl alcohol or a mixture thereof.

3. Disinfectant or antiseptic according to claim 1, **characterised by** the concentration of the alcohol or the alcohols being 30 to 95% in weight relative to the total weight of the preparation.

4. Disinfectant or antiseptic according to claim 1 **characterised by** the disinfectant or antiseptic containing additional auxiliary, additive and/or active agents, in particular humectants, lipid replenishers, colourants and/or perfumes.

5. Disinfectant or antiseptic according to claim 1 **characterised by** the disinfectant or antiseptic also containing other microbicidal active agents.

6. Utilisation of the disinfectants according to claim 1 as skin disinfectant, hand disinfectant and/or disinfectant for surfaces, particularly inanimate surfaces, or in particular hard surfaces and appliances.

7. Utilisation of at least one alkylthiouronium and/or α, ω-alkylendithiouronium salt in a skin disinfectant or a hand disinfectant.

## Revendications

1. Produit de désinfection ou antiseptique avec une substance active à base d'alcool, **caractérisé en ce qu'**il contient au moins un sel d'alkyle thiourée et/ou un sel d'alkylène α,ω-dithiourée et **en ce que** la teneur en un ou plusieurs sels d'alkyle thiourée et/ou d'alkylène α,ω-dithiourée est de 0,05 à 5 % en poids, rapportés au poids total de la préparation.

2. Produit de désinfection ou antiseptique suivant la revendication 1, **caractérisé en ce qu'**il contient comme substance active à base d'alcool de l'éthanol, de l'isopropanol ou du n-propanol ou leurs mélanges.

3. Produit de désinfection ou antiseptique suivant la revendication 1, **caractérisé en ce que** la concentration de l'alcool ou des alcools est de 30 à 95 % en poids, rapportés au poids total de la préparation.

4. Produit de désinfection ou antiseptique suivant la revendication 1, **caractérisé en ce qu'**il contient des substances auxiliaires, additifs et/ou substances actives supplémentaires, en particulier des produits servant à retenir l'humidité, des surgraissants, des colorants et/ou un parfum.

5. Produit de désinfection ou antiseptique suivant la revendication 1, **caractérisé en ce qu'**il contient en plus d'autres substances actives microbicides.

6. Utilisation des produits de désinfection suivant la revendication 1 comme produits de désinfection pour la peau, produits de désinfection pour les mains et/ou produit de désinfection en particulier pour surfaces immobiles ou en particulier surfaces dures et appareils.

7. Utilisation d'au moins un sel d'alkyle thiourée et/ou d'alkylène α,ω-dithiourée dans un produit de désinfection pour la peau ou un produit de désinfection pour les mains.
